# EUROPEAN PATENT APPLICATION

(11) **EP 4 753 102 A1**
(43) Date of publication of application: **03.06.2026**
(21) Application number: 24845351.6
(22) Date of filing: 04.07.2024
(51) Int. Cl.: H02J 7/04, H02J 7/02, H02J 7/10

(54) **CHARGING DEVICE, CHARGING SYSTEM, CHARGING METHOD, AND PROGRAM**

(30) Priority: 24.07.2023 JP 2023120142
(71) Applicant: Panasonic Corporation, Osaka 571-8501 (JP)
(72) Inventor: IKEDA, Masaki, Kadoma-shi, Osaka 571-0057 (JP)
(74) Representative: Müller-Boré & Partner Patentanwälte PartG mbB
(86) International application number: PCT/JP2024/024192
(87) International publication number: WO 2025/022970

(57) **Abstract**

The problem to be overcome by the present disclosure is to contribute to improving convenience. A charger (1) includes a pack holder, a level acquirer (142), a level selector (143), a level outputter (144), and a power supply controller (145). To the pack holder, a battery pack (3) is removably attached. The level acquirer (142) acquires a plurality of output capacity levels from a power supply unit (2). The plurality of output capacity levels are provided for the power supply unit (2). Each of the plurality of output capacity levels includes a combination of an output voltage and an output current. The level selector (143) selects an output capacity level from the plurality of output capacity levels acquired by the level acquirer (142). The level outputter (144) outputs the output capacity level selected by the level selector (143) to the power supply unit (2). The power supply controller (145) controls the supply of electric power to the battery pack (3) according to the output capacity level selected by the level selector (143).

## Description

### Technical Field

The present disclosure generally relates to a charger, a charging system, a charging method, and a program.

### Background Art

Patent Literature 1 discloses a charger which can charge a battery with electricity from at least two types of power supplies. The charger is provided with: a DC/DC converter and an AC/DC converter which serve as voltage conversion means; a microcomputer; an external selection means; and a charging current detection circuit. The microcomputer selects a power supply to be used either in a predetermined order of priorities or in response to a signal supplied from the external selection means and turns on only a corresponding voltage conversion means. The voltage conversion means converts the voltage supplied from the selected power supply into a desired voltage. The charging current detection circuit detects a charging current and delivers the charging current thus detected to the microcomputer. The microcomputer sends a constant current control signal to a voltage detection means to control the charging current toward a desired current value depending on the voltage detection means.

### Citation List

### Patent Literature

Patent Literature 1: JP 2005-245145 A

### Summary of Invention

The charger of Patent Literature 1 is able to charge a battery with electricity using a power supply selected from the two or more types of power supplies. However, the charger of Patent Literature 1 is unable to select an appropriate output capacity level to charge the battery even if one power supply has a plurality of output capacity levels. Therefore, the charger of Patent Literature 1 still leaves room for improvement of convenience.

In view of the foregoing background, it is therefore an object of the present disclosure to contribute to improving convenience.

A charger according to an aspect of the present disclosure includes a pack holder, a level acquirer, a level selector, a level outputter, and a power supply controller. To the pack holder, a battery pack is removably attached. The level acquirer acquires a plurality of output capacity levels from a power supply unit. The plurality of output capacity levels are provided for the power supply unit. Each of the plurality of output capacity levels includes a combination of an output voltage and an output current. The level selector selects an output capacity level from the plurality of output capacity levels acquired by the level acquirer. The level outputter outputs the output capacity level selected by the level selector to the power supply unit. The power supply controller controls the supply of electric power to the battery pack according to the output capacity level selected by the level selector.

A charging system according to another aspect of the present disclosure includes the charger described above, the power supply unit, and a cable connecting the charger to the power supply unit.

A charging method according to still another aspect of the present disclosure is a charging method to be performed using a charger. The charger includes a pack holder to which a battery pack is removably attached. The charging method includes a level acquiring step, a level selecting step, a level outputting step, and a power supply controlling step. The level acquiring step includes acquiring a plurality of output capacity levels from a power supply unit. The plurality of output capacity levels are provided for the power supply unit. Each of the plurality of output capacity levels includes a combination of an output voltage and an output current. The level selecting step includes selecting an output capacity level from the plurality of output capacity levels acquired in the level acquiring step. The level outputting step includes outputting, to the power supply unit, the output capacity level selected in the level selecting step. The power supply controlling step includes controlling the supply of electric power to the battery pack according to the output capacity level selected in the level selecting step.

A program according to yet another aspect of the present disclosure is a program designed to cause one or more processors to perform the charging method described above.

### Brief Description of Drawings

[FIG. 1] FIG. 1 is a block diagram of a system including a charger according to an exemplary embodiment;
[FIG. 2] FIG. 2 is a side view illustrating the charger, a battery pack, and an electric tool;
[FIG. 3] FIG. 3 is a flowchart showing the procedure in which a charging method is performed using the charger;
[FIG. 4] FIG. 4 is a block diagram of a charger according to a first variation; and
[FIG. 5] FIG. 5 is a block diagram of a charger according to a second variation.

### Description of Embodiments

A charger and charging system according to an embodiment will now be described with reference to the accompanying drawings. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. It should also be noted that the drawings to be referred to in the following description of embodiments are all schematic representations. Thus, the ratio of the dimensions (including thicknesses) of respective constituent elements illustrated on the drawings does not always reflect their actual dimensional ratio.

### (1) Embodiment

### (1.1) Configuration

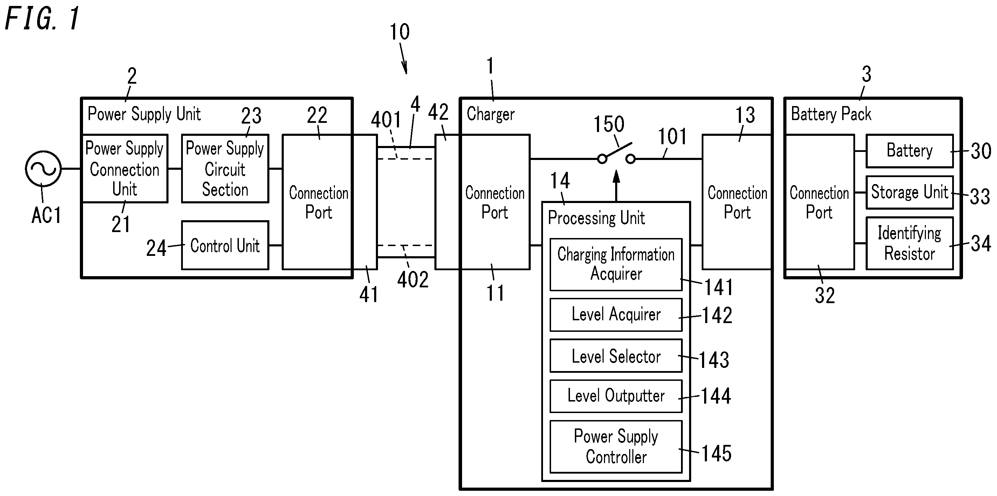

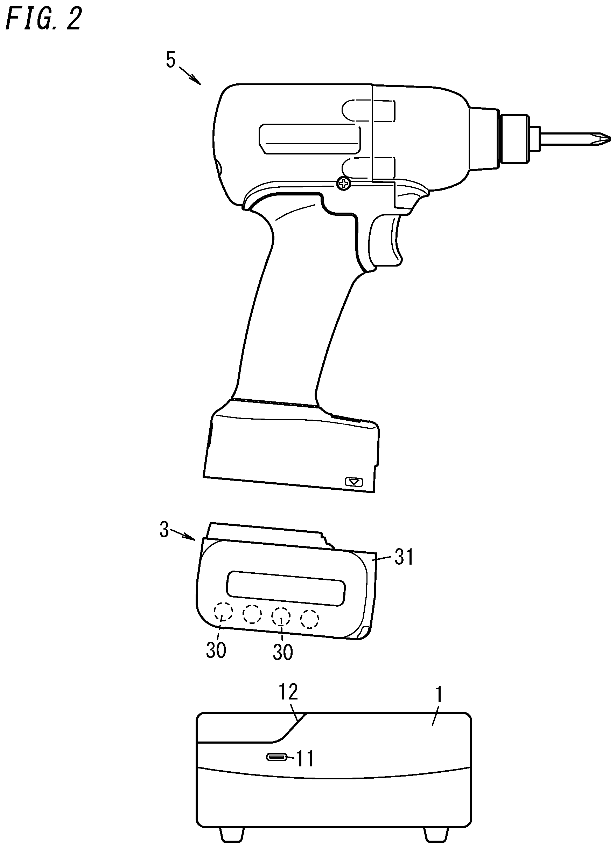

A charger 1 according to this embodiment (refer to FIGS. 1 and 2) is a device to be interposed between a power supply unit 2 and a battery pack 3. The charger 1 according to this embodiment is a device for charging the battery pack 3 with electricity by supplying electric power from the power supply unit 2 to the battery pack 3. The charger 1 constitutes a charging system 10 together with not only a cable 4 connecting the charger 1 and the power supply unit 2 but also the power supply unit 2. In other words, the charging system 10 includes the charger 1, the power supply unit 2, and the cable 4.

The power supply unit 2 is a DC power supply for outputting DC power. The power supply unit 2 has a plurality of output capacity levels. Each of the plurality of output capacity levels includes a combination of an output voltage and an output current. That is to say, the power supply unit 2 may provide, with respect to each of the plurality of output capacity levels of the power supply unit 2, output power defined by a corresponding combination of an output voltage and an output current.

As shown in FIG. 1, the power supply unit 2 includes a power supply connection unit 21, a connection port 22, a power supply circuit section 23, and a control unit 24.

The power supply connection unit 21 includes, for example, a terminal to be connected to an AC power supply AC1. The power supply connection unit 21 is, for example, a plug to be connected to an AC outlet. The power supply connection unit 21 may also be a terminal (e.g., a quick connect terminal) to be connected to a power cable for delivering AC power. AC power (e.g., an AC power of 100V, 110V, 120V, 220V, or 230V) is supplied, via the power supply connection unit 21, to the power supply unit 2 from the AC power supply AC1.

The power supply circuit section 23 converts the AC power supplied to the power supply connection unit 21 into desired DC power. The power supply circuit section 23 includes an AC/DC converter. The power supply circuit section 23 includes, for example, one or more switching elements. The operation (i.e., the ON and OFF states) of the switching element(s) is controlled by the control unit 24. Controlling the operation of the switching element(s) allows the power supply circuit section 23 to convert the AC power into the desired DC power and output the DC power thus generated.

The power supply circuit section 23 may generate variable DC power (i.e., output power). The power supply circuit section 23 may generate, under the control of the control unit 24, output power (i.e., an output current and an output voltage) according to any of the plurality of output capacity levels of the power supply unit 2.

The control unit 24 controls the operation of the power supply circuit section 23. The control unit 24 controls the operation of the switching element(s) of the power supply circuit section 23. Also, the control unit 24 performs the function of communicating, via a wired connection, with the charger 1 connected to the power supply unit 2 via the connection port 22.

The cable 4 is connected to the connection port 22. As shown in FIG. 1, the cable 4 includes a first connector 41 and a second connector 42 at both ends thereof. For example, the first connector 41 of the cable 4 is connected to the connection port 22. The cable 4 includes a power supply path 401 and a signal path 402. The power supply path 401 is connected to the power supply circuit section 23 of the power supply unit 2 with the cable 4 connected to the connection port 22 and delivers DC power from the power supply circuit section 23. The signal path 402 is connected to the control unit 24 of the power supply unit 2 with the cable 4 connected to the connection port 22 and transmits a signal from/to the control unit 24.

The battery pack 3 is, for example, to be used for an electric tool 5 (refer to FIG. 2). The battery pack 3 supplies electric power to the electric tool 5 to which the battery pack 3 is attached. Examples of the electric tools 5 include various types of electric tools including an impact screwdriver, an impact wrench, a drill screwdriver, a hammer drill, a hole saw, and a cleaner. Also, in the same type of electric tools 5, the output power thereof varies depending on, for example, their intended use. In addition, there are as many types of battery packs 3 as combinations of rated output voltages and rated capacitances so that the battery packs 3 are compatible with those various types of electric tools 5 with a variety of output power levels.

As shown in FIG. 2, the battery pack 3 includes one or more (e.g., four in the example illustrated in FIG. 2) batteries 30 (i.e., battery cells), and a battery pack body 31 for housing the one or more batteries 30. The one or more batteries 30 are housed inside the battery pack body 31. Each of the one or more batteries 30 is a rechargeable battery. Each of the one or more batteries 30 is, for example, a lithium-ion battery or a solid-state battery.

As described above, there are as many types of battery packs 3 as combinations of rated output voltages and rated capacitances. The rated output voltage of each of the battery packs 3 is determined, for example, by the number of the batteries 30 connected in series. That is to say, each of the battery packs 3 has a rated output voltage determined by the product of the number of the batteries 30 connected in series and the rated voltage of each of the batteries 30. When the rated voltage of each of the batteries 30 is 3.6 V, the rated output voltage of the battery pack 3 may be, for example, 3.6 V, 7.2 V, 14.4 V, 18.0 V, or 28.8 V. Also, each of the battery packs 3 includes one or more sets of the batteries 30 connected in series (hereinafter referred to as a "series battery set" for the sake of convenience). In a battery pack 3 including two or more series battery sets, the series battery sets are connected in parallel, for example.

As shown in FIG. 1, the battery pack 3 further includes a connection terminal unit 32, a storage unit 33, and an identifying resistor 34.

The connection terminal unit 32 includes a power supply terminal, a first signal terminal, and a second signal terminal. The power supply terminal is connected to the at least one battery 30. The first signal terminal is connected to the storage unit 33. The second signal terminal is connected to the identifying resistor 34.

The connection terminal unit 32 may be electrically connected to the electric tool 5. Electric power is supplied from the one or more batteries 30 to the electric tool 5 via the power supply terminal with the connection terminal unit 32 connected to the electric tool 5. Also, the connection terminal unit 32 may be electrically connected to the charger 1. Electric power is supplied from the charger 1 to the one or more batteries 30 via the power supply terminal with the connection terminal unit 32 connected to the charger 1, whereby the one or more batteries 30 are charged.

Examples of the storage unit 33 include an EEPROM (Electrically Erasable Programmable Read-Only Memory) and a ROM (Read-Only Memory). The storage unit 33 stores information about the battery pack 3 for which the storage unit 33 is provided. The storage unit 33 stores the rated output voltage of the battery pack 3, identification information (e.g., a product number) of the battery pack 3, and others sorts of information. When an external device such as the electric tool 5 or the charger 1 is connected to the connection terminal unit 32, the external device may read out, via the first signal terminal, the information stored in the storage unit 33.

The identifying resistor 34 has a resistance value which is determined in advance according to the rated output voltage of the battery pack 3, for example. That is to say, a plurality of battery packs 3 with different rated output voltages have mutually different resistance values of the identifying resistors 34. For example, a battery pack 3 with a rated output voltage of 3.6 V and a battery pack 3 with a rated output voltage of 7.2 V have different resistance values of the identifying resistors 34. The external device may detect a resistance value of the identifying resistor 34 by causing a current to flow through the identifying resistor 34 via the second signal terminal. The resistance values of the identifying resistors 34 may be different from each other among a plurality of battery packs 3, of which the rated capacitances and other characteristic values are different from each other, either instead of, or in addition to, their rated output voltages.

The charger 1 is connected to the power supply unit 2. As shown in FIGS. 1 and 2, the charger 1 includes a connection port 11. For example, the second connector 42 of the cable 4 is connected to the connection port 11. The charger 1 and the power supply unit 2 are connected to each other via the cable 4 by connecting the second connector 42 of the cable 4 to the connection port 11 of the charger 1 and connecting the first connector 41 of the cable 4 to the connection port 22 of the power supply unit 2. Note that, in the example illustrated in FIG. 2, the connection port 11 is provided on a side surface of the casing of the charger 1. However, this should not be construed as limiting. Alternatively, the connection port 11 may also be provided on any other surface of the casing such as the upper surface, front surface, or rear surface thereof.

The battery pack 3 is removably attached to the charger 1. As shown in FIG. 2, the charger 1 includes a pack holder 12 to which the battery pack 3 is removably attached. The pack holder 12 mechanically holds the battery pack 3 attached thereto. The pack holder 12 includes a recessed structure, a raised structure, or a slide groove, into each of which the battery pack 3 is fitted, for example, for holding the battery pack 3.

The charger 1 includes a connection terminal unit 13. The connection terminal unit 13 is electrically connected to (the connection terminal unit 32 of) the battery pack 3 attached to the pack holder 12. The connection terminal unit 13 includes a power supply terminal, a first signal terminal, and a second signal terminal. The power supply terminal of the connection terminal unit 13 is connected to the power supply terminal of the connection terminal unit 32 of the battery pack 3. The charger 1 may supply electric power to the battery pack 3 via the power supply terminal of the connection terminal unit 13. The first signal terminal of the connection terminal unit 13 is connected to the first signal terminal of the connection terminal unit 32 of the battery pack 3. The charger 1 may read out the information stored in the storage unit 33 from the battery pack 3 via the first signal terminal of the connection terminal unit 13. The second signal terminal of the connection terminal unit 13 is connected to the second signal terminal of the connection terminal unit 32 of the battery pack 3. The charger 1 may detect a resistance value of the identifying resistor 34 from the battery pack 3 via the second signal terminal of the connection terminal unit 13.

As shown in FIG. 1, the charger 1 includes a processing unit 14. The processing unit 14 may be implemented as, for example, a computer system including one or more processors (microprocessors) and one or more memories. The functions of the processing unit 14 are performed by making the one or more processors execute one or more programs stored in the one or more memories. In this embodiment, the program is stored in advance in the memory of the processing unit 14. Alternatively, the program may also be downloaded via a telecommunications line such as the Internet or distributed after having been stored in a non-transitory storage medium such as a memory card.

As shown in FIG. 1, the processing unit 14 includes a charging information acquirer 141, a level acquirer 142, a level selector 143, a level outputter 144, and a power supply controller 145. In other words, the processing unit 14 performs the respective functions of the charging information acquirer 141, the level acquirer 142, the level selector 143, the level outputter 144, and the power supply controller 145.

The charging information acquirer 141 acquires charging information from the battery pack 3 attached to the pack holder 12. As used herein, the "charging information" refers to a piece of information about charging the battery pack 3 with electricity. The charging information may include information about the rated output voltage of the battery pack 3, the identification information of the battery pack 3 and others sorts of information about the battery pack 3. The charging information acquirer 141 acquires the charging information from the battery pack 3 by reading out the information stored in the storage unit 33 of the battery pack 3 via the first signal terminal of the connection terminal unit 13 and detecting the resistance value of the identifying resistor 34 via the second signal terminal of the connection terminal unit 13. The charging information acquirer 141 may also acquire additional information (e.g., the rated output voltage and rated capacitance of the battery pack 3) about charging the battery pack 3 with electricity by collating the charging information (e.g., the identification information of the battery pack 3) thus acquired with various data tables (e.g., a data table showing the relationship between the identification information of the battery pack 3 and the rated output voltage and rated capacitance of the battery pack 3) stored in a memory. That is to say, the charging information that the charging information acquirer 141 acquires from the battery pack 3 includes a piece of information about the rated output voltage of the battery pack 3.

The level acquirer 142 acquires the plurality of output capacity levels of the power supply unit 2 from the power supply unit 2 connected to the connection port 11. As described above, each of the plurality of output capacity levels includes a combination of an output voltage and an output current. That is to say, any of various power supply units 2 having mutually different output capacity levels may be connected to the charger 1. Also, the power supply unit 2 connected to the charger 1 may have a plurality of output capacity levels. Thus, using the level acquirer 142, the processing unit 14 of the charger 1 acquires, from the power supply unit 2, information (i.e., the output capacity level) about the electric power that the power supply unit 2 is able to output.

The level selector 143 selects an output capacity level from the plurality of output capacity levels acquired by the level acquirer 142. The level selector 143 selects the output capacity level based on a predetermined condition. The level selector 143 selects the output capacity level in accordance with the charging information acquired by the charging information acquirer 141.

More specifically, the level selector 143 selects an output capacity level based on at least the rated output voltage of the battery pack 3. For example, the level selector 143 selects the output capacity level so that the output voltage of the power supply unit 2 may be at least equal to the rated output voltage of the battery pack 3.

The level selector 143 may select an output capacity level based on the number of the series battery sets connected in parallel in the battery pack 3 (hereinafter referred to as the "number of parallel battery sets" for the sake of convenience). For example, the level selector 143 may select an output capacity level so that the output current of the power supply unit 2 may be greater when a battery pack 3 with M (where M is an integer equal to or greater than N + 1) parallel battery sets is attached to the charger 1 than when a battery pack 3 with N (where N is an integer equal to or greater than one) parallel battery sets is attached to the charger 1. That is to say, the charging information may include a piece of information about the number of parallel battery sets that is the number of battery sets connected in parallel in the battery pack 3. The level selector 143 may select an output capacity level so that the output current of the power supply unit 2 may be greater when the number of parallel battery sets is two than when the number of parallel battery sets is one.

The level outputter 144 outputs the output capacity level selected by the level selector 143 to the power supply unit 2. The level outputter 144 outputs the output capacity level to the power supply unit 2 via the signal path 402 of the cable 4 connected to the connection port 11.

In the power supply unit 2, the control unit 24 acquires the output capacity level via the signal path 402 of the cable 4 connected to the connection port 22. The control unit 24 controls the operation of the power supply circuit section 23 according to the output capacity level thus acquired. That is to say, the control unit 24 controls the operation of the power supply circuit section 23 so that an output voltage and output current corresponding to the output capacity level thus acquired may be output to the power supply path 401 of the cable 4 by the power supply circuit section 23. In short, the level outputter 144 of the charger 1 outputs the output capacity level selected by the level selector 143 to the power supply unit 2 to cause the power supply unit 2 to output electric power according to the output capacity level (i.e., the output capacity level selected by the level selector 143).

The power supply controller 145 of the charger 1 controls the supply of electric power to the battery pack 3 according to the output capacity level selected by the level selector 143. The power supply controller 145 controls the supply of electric power to the battery pack 3 by, for example, controlling the ON/OFF states of a switch 150 (e.g., a semiconductor switch such as an FET (Field Effect Transistor)) provided for a power supply path 101 between the connection port 11 and the connection terminal unit 13 (i.e., a power supply terminal). That is to say, using the electric power output by the power supply unit 2, the power supply controller 145 controls the supply of electric power to the battery pack 3 according to the output capacity level selected by the level selector 143. For example, the power supply controller 145 charges the one or more batteries 30 of the battery pack 3 attached to the pack holder 12 until the one or more batteries 30 of the battery pack 3 is fully charged. For example, the power supply controller 145 detects the voltage at the power supply terminal of the connection terminal unit 13 to detect the current battery voltage of the battery pack 3, thereby charging the battery pack 3 with electricity until the battery voltage thus detected reaches the rated output voltage of the battery pack 3.

### (1.2) Operation

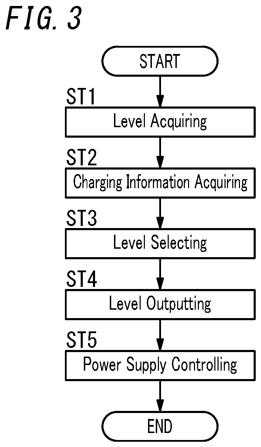

A charging operation performed by the charger 1 according to this embodiment on the battery pack 3 will be described with reference to the flowchart shown in FIG. 3.

When the power supply unit 2 is connected to the charger 1 via the cable 4, the charger 1 acquires the plurality of output capacity levels of the power supply unit 2 from the power supply unit 2 (in a level acquiring step ST1). Also, when the battery pack 3 is attached to the pack holder 12, the charger 1 acquires charging information from the battery pack 3 (in a charging information acquiring step ST2). Then, the charger 1 selects, in accordance with the charging information, an output capacity level from the plurality of output capacity levels that the charger 1 has acquired from the power supply unit 2 (in a level selecting step ST3) and outputs the output capacity level thus selected to the power supply unit 2 (in a level outputting step ST4). When the power supply unit 2 acquires, from the charger 1, the output capacity level thus selected, the power supply unit 2 returns a response (i.e., an Ack signal) to the charger 1 to acknowledge the safe acquisition of the output capacity level thus selected. Then, the power supply unit 2 outputs electric power, which corresponds to the output capacity level specified by the charger 1, to the cable 4 The charger 1 charges the battery pack 3 with the electric power supplied from the power supply unit 2 via the cable 4 (in a power supply controlling step ST5).

Note that the flowchart shown in FIG. 3 shows only an exemplary operating procedure of the charger 1 and should not be construed as limiting. Optionally, the processing steps shown in FIG. 3 may be performed in a different order from the illustrated one, some of the processing steps shown in FIG. 3 may be omitted as appropriate, and/or an additional processing step may be performed as needed. For example, the level acquiring step ST1 and the charging information acquiring step ST2 may be performed in reverse order. Optionally, the level acquiring step ST1 and the charging information acquiring step ST2 may also be performed after the power supply unit 2 and the battery pack 3 are both connected to the charger 1.

As can be seen from the foregoing description, in a situation where the power supply unit 2 has a plurality of output capacity levels, the charger 1 according to this embodiment allows the power supply unit 2 to output electric power at an output capacity level suitable for the battery pack 3 attached to the pack holder 12. Also, the charger 1 according to this embodiment allows for charging any of a variety of battery packs 3 with a charging voltage and charging current suitable for the battery pack 3. This enables the user to charge, without taking a lot of trouble, a given battery pack 3 at a charging voltage and charging current suitable for the battery pack 3, thus allowing for improving the user friendliness.

### (1.3) Specific Example

In a specific example, the power supply unit 2 may be implemented as a USB (Universal Serial Bus) PD (Power Delivery) charger. The USB PD charger performs the power supply (source) side function defined by the USB PD standard and follows the source power rule established by the USB PD standard. According to the USB PD standard, combinations of output voltages and output currents that need to be able to be output, in other words, the output capacity levels that the charger needs to have, are determined with respect to the rated outputs of a charger. For example, a USB PD charger with a rated output of 60 W needs to be able to output (have an output capacity level of) 5 V/3 A, 9 V/3 A, 15 V/3 A, and 20 V/3 A. Optionally, the USB PD charger with a rated output of 60 W may also have other output capacity levels (e.g., 12 V/3 A). The USB PD charger may include a USB outlet embedded in, for example, a wall or floor of a building or a device (a charger) including a plug to be inserted and connected into an AC outlet, whichever is appropriate.

In this case, the charger 1 performs the power reception (Sink) side function defined by the USB PD standard and follows the sink power rule established by the USB PD standard. Thus, the processing unit 14 of the charger 1 performs (e.g., by the level acquirer 142, the level selector 143, and the level outputter 144) the function of negotiating with the power supply unit 2 serving as the USB PD charger.

In addition, the cable 4 may be a USB Type-C cable. Each of the first connector 41 and second connector 42 of the cable 4 may be a USB Type-C connector (plug). Also, each of the connection ports 11 and 22 may be a USB Type-C connector (receptacle).

The level selector 143 of the charger 1 selects an output capacity level so that the output voltage of the power supply unit 2 may be greater than the rated output voltage of the battery pack 3 attached to the pack holder 12, for example. Also, the level selector 143 may also select an output capacity level so that the output current may be 3 A when the number of parallel battery sets of the battery pack 3 is one and that the output current may be 5 A when the number of parallel battery sets of the battery pack 3 is equal to or greater than two (also when the cable 4 is compatible with a current supply of 5 A).

The charger 1 and charging system 10 according to this specific example allows for charging the battery pack 3, which cannot perform the function defined by the USB PD standard, with electric power supplied from the power supply unit 2 implemented as a USB PD charger. This improves the user friendliness.

### (2) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Also, the functions of the charger 1 according to the exemplary embodiment described above may also be implemented as, for example, a charging method, a computer program, or a non-transitory storage medium on which the computer program is stored.

Next, variations of the exemplary embodiment described above will be enumerated one after another. Note that the variations to be described below may be adopted in combination as appropriate.

The processing unit 14 according to the preset disclosure includes a computer system. The computer system includes a processor and a memory as principal hardware components thereof. The computer system performs the functions of the processing unit 14 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the processing unit 14 are aggregated in a single housing. However, this is not an essential configuration for the charger 1. Alternatively, those constituent elements of the processing unit 14 may be distributed in multiple different housings. Conversely, the plurality of functions of the processing unit 14 may be aggregated in a single housing. Still alternatively, at least some functions of the processing unit 14 may be implemented as, for example, a cloud computing system as well.

### (2.1) First Variation

In a charger 1 according to a first variation, the level selector 143 selects two or more output capacity levels from the plurality of output capacity levels that the level acquirer 142 has acquired. The two or more output capacity levels selected by the level selector 143 have, for example, the same output voltage but mutually different output currents.

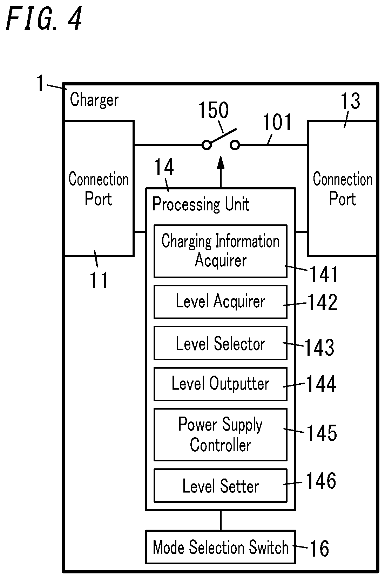

Also, as shown in FIG. 4, the charger 1 further includes a level setter 146 for setting the output capacity level at one of the two or more output capacity levels selected by the level selector 143. The level setter 146 sets the output capacity level at one of the two or more output capacity levels in accordance with a predetermined reference.

For example, the casing of the charger 1 is provided with a mode selection switch 16 which may be operated by the user. The mode selection switch 16 is a switch for selecting a charging mode of the charger 1 from a normal mode and a low power mode. The mode selection switch 16 is, for example, a slide switch to change, depending on the operating position of the switch, the charging mode of the charger 1.

The level setter 146 sets, according to the charging mode selected by the mode selection switch 16, the output capacity level at one of the two or more output capacity levels selected by the level selector 143. For example, when two output capacity levels are selected by the level selector 143 and the low power mode is selected by the mode selection switch 16, the level setter 146 sets the output capacity level at one output capacity level having the lower output power (i.e., output current) than the other of the two output capacity levels. On the other hand, when two output capacity levels are selected by the level selector 143 and the normal mode is selected by the mode selection switch 16, the level setter 146 sets the output capacity level at one output capacity level having the greater output power (i.e., output current) than the other of the two output capacity levels.

The level outputter 144 outputs the one output capacity level set by the level setter 146 to the power supply unit 2. The power supply unit 2 outputs electric power to the cable 4 in accordance with the one output capacity level specified by the charger 1 (i.e., the output capacity level set by the level setter 146).

As can be seen, the charger 1 according to this variation allows the user to select the charging mode from the normal mode and the low power mode. For example, a mobile battery (or a battery pack other than the battery pack 3) which stores a finite amount of electrical energy may be connected as the power supply unit 2 to the charger 1. In that case, the user may select the low power mode as the charging mode to cause the power supply unit 2 to supply, to the battery pack 3, required minimum electrical energy (i.e., charge the battery pack 3 with the electrical energy) for performing operations using the electric tool 5. This allows for saving the electrical energy stored in the power supply unit 2 (such as a mobile battery). In this manner, the charger 1 according to this variation allows for contributing to further improving the user friendliness.

### (2.2) Second Variation

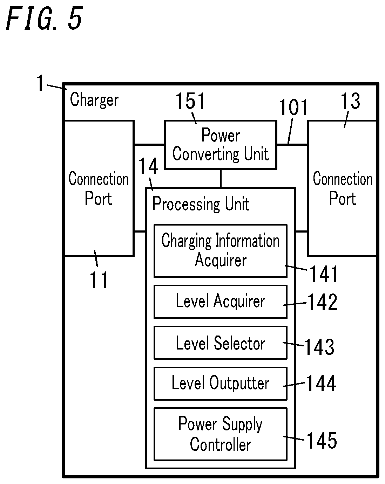

As shown in FIG. 5, a charger 1 according to a second variation includes a power converting unit 151 instead of the switch 150. The power converting unit 151 includes, for example, a DC/DC converter. The power supply controller 145 controls the supply of electric power to the battery pack 3 by controlling the operation of the power converting unit 151.

The charger 1 according to this variation may step up or down the voltage supplied from the power supply unit 2 to supply the voltage thus stepped up or down to the battery pack 3. The power supply controller 145 may charge the battery pack 3 until the battery pack 3 is fully charged by performing, for example, a constant current charging session in an initial stage of charging (e.g., when the battery voltage of the battery pack 3 is less than a predetermined value) and then by performing a constant voltage charging session when charging is about to be completed (e.g., when the battery voltage of the battery pack 3 is equal to or greater than the predetermined value).

The charger 1 according to this variation allows for contributing to further improving the user friendliness.

### (2.3) Other Variations

In one variation, a charger 1 may be used to be connected to a power supply unit 2 having only one output capacity level. In that case, if the output capacity level of the power supply unit 2 is unsuitable for charging the battery pack 3 (e.g., if the rated output voltage of the battery pack 3 is greater than the output voltage of the power supply unit 2), then the charger 1 may prohibit the power supply unit 2 from charging the battery pack 3 by turning off the switch 150.

In one variation, a charger 1 may also be a charger dedicated to a specific type of battery pack 3. In that case, the processing unit 14 of the charger 1 does not have to acquire charging information from the battery pack 3 as long as the processing unit 14 has the charging information of the battery pack 3 in advance. Therefore, the charging information acquirer 141 may be omitted in such a variation.

### (3) Aspects

As can be seen from the foregoing description, a charger (1) according to a first aspect includes a pack holder (12), a level acquirer (142), a level selector (143), a level outputter (144), and a power supply controller (145). To the pack holder (12), a battery pack (3) is removably attached. The level acquirer (142) acquires a plurality of output capacity levels from a power supply unit (2). The plurality of output capacity levels are provided for the power supply unit (2). Each of the plurality of output capacity levels includes a combination of an output voltage and an output current. The level selector (143) selects an output capacity level from the plurality of output capacity levels acquired by the level acquirer (142). The level outputter (144) outputs the output capacity level selected by the level selector (143) to the power supply unit (2). The power supply controller (145) controls the supply of electric power to the battery pack (3) according to the output capacity level selected by the level selector (143).

This aspect allows for contributing to improving the user friendliness.

A charger (1) according to a second aspect, which may be implemented in conjunction with the first aspect, further includes a charging information acquirer (141). The charging information acquirer (141) acquires charging information from the battery pack (3) attached to the pack holder (12). The charging information is a piece of information about charging the battery pack (3) with electricity. The level selector (143) selects the output capacity level in accordance with the charging information acquired by the charging information acquirer (141).

This aspect allows for selecting an output capacity level suitable for the battery pack (3) attached to the pack holder (12). This allows for charging any of a variety of battery packs (3), thus allowing for contributing to further improving the user friendliness.

In a charger (1) according to a third aspect, which may be implemented in conjunction with the second aspect, the charging information includes a piece of information about a rated output voltage of the battery pack (3). The level selector (143) selects the output capacity level to make an output voltage of the power supply unit (2) at least equal to the rated output voltage of the battery pack (3).

This aspect allows for charging the battery pack (3) at a voltage that corresponds to the rated output voltage of the battery pack (3).

In a charger (1) according to a fourth aspect, which may be implemented in conjunction with the second or third aspect, the charging information includes a piece of information about the number of parallel battery sets that is the number of battery sets connected in the battery pack (3) in parallel. The level selector (143) selects the output capacity level to make an output current of the power supply unit (2) greater when the number of parallel battery sets is two than when the number of parallel battery sets is one.

This aspect allows for charging the battery pack (3) with a current according to the number of parallel battery sets of the battery pack (3).

In a charger (1) according to a fifth aspect, which may be implemented in conjunction with any one of the first to fourth aspects, the level selector (143) selects two or more output capacity levels from the plurality of output capacity levels. The charger (1) further includes a level setter (146) for setting the output capacity level at one output capacity level out of the two or more output capacity levels. The level outputter (144) outputs the one output capacity level set by the level setter (146) to the power supply unit (2).

This aspect allows for contributing to further improving the user friendliness.

A charging system (10) according to a sixth aspect includes the charger (1) according to any one of the first to fifth aspects, the power supply unit (2), and a cable (4) connecting the charger (1) to the power supply unit (2).

This aspect allows for contributing to improving the user friendliness.

A charging method according to a seventh aspect is a charging method to be performed using a charger (1). The charger (1) includes a pack holder (12) to which a battery pack (3) is removably attached. The charging method includes a level acquiring step (ST1), a level selecting step (ST3), a level outputting step (ST4), and a power supply controlling step (ST5). The level acquiring step (ST1) includes acquiring a plurality of output capacity levels from a power supply unit (2). The plurality of output capacity levels are provided for the power supply unit (2). Each of the plurality of output capacity levels includes a combination of an output voltage and an output current. The level selecting step (ST3) includes selecting an output capacity level from the plurality of output capacity levels acquired in the level acquiring step (ST1). The level outputting step (ST4) includes outputting, to the power supply unit (2), the output capacity level selected in the level selecting step (ST3). The power supply controlling step (ST5) includes controlling the supply of electric power to the battery pack (3) according to the output capacity level selected in level selecting step (ST3).

This aspect allows for contributing to improving the user friendliness.

A program according to an eighth aspect is designed to cause one or more processors to perform the charging method according to the seventh aspect.

This aspect allows for contributing to improving the user friendliness.

### Reference Signs List

- 1: Charger
- 12: Pack Holder
- 141: Charging Information Acquirer
- 142: Level Acquirer
- 143: Level Selector
- 144: Level Outputter
- 145: Power Supply Controller
- 146: Level Setter
- 2: Power Supply Unit
- 3: Battery Pack
- 4: Cable
- 10: Charging System
- ST1: Level Acquiring Step
- ST3: Level Selecting Step
- ST4: Level Outputting Step
- ST5: Power Supply Controlling Step

## Claims

1. A charger comprising:
a pack holder to which a battery pack is removably attached;
a level acquirer configured to acquire, from a power supply unit, a plurality of output capacity levels, the plurality of output capacity levels being provided for the power supply unit, each of the plurality of output capacity levels including a combination of an output voltage and an output current;
a level selector configured to select an output capacity level from the plurality of output capacity levels acquired by the level acquirer;
a level outputter configured to output the output capacity level selected by the level selector to the power supply unit; and
a power supply controller configured to control supply of electric power to the battery pack according to the output capacity level selected by the level selector.

2. The charger of claim 1, further comprising a charging information acquirer configured to acquire charging information from the battery pack attached to the pack holder, the charging information being a piece of information about charging the battery pack with electricity, wherein
the level selector is configured to select the output capacity level in accordance with the charging information acquired by the charging information acquirer.

3. The charger of claim 2, wherein
the charging information includes a piece of information about a rated output voltage of the battery pack, and
the level selector is configured to select the output capacity level to make an output voltage of the power supply unit at least equal to the rated output voltage of the battery pack.

4. The charger of claim 2 or 3, wherein
the charging information includes a piece of information about a numerical number of parallel battery sets that is a numerical number of battery sets connected in the battery pack in parallel, and
the level selector is configured to select the output capacity level to make an output current of the power supply unit greater when the numerical number of parallel battery sets is two than when the numerical number of parallel battery sets is one.

5. The charger of any one of claims 1 to 4, wherein
the level selector is configured to select two or more output capacity levels from the plurality of output capacity levels,
the charger further includes a level setter configured to set the output capacity level at one output capacity level out of the two or more output capacity levels, and
the level outputter is configured to output the one output capacity level set by the level setter to the power supply unit.

6. The charging system comprising;
a charger of any one of claims 1 to 5;
the power supply unit; and
a cable connecting the charger to the power supply unit.

7. A charging method to be performed using a charger, the charger including a pack holder to which a battery pack is removably attached, the charging method comprising:
a level acquiring step including acquiring, from a power supply unit, a plurality of output capacity levels, the plurality of output capacity levels being provided for the power supply unit, each of the plurality of output capacity levels including a combination of an output voltage and an output current;
a level selecting step including selecting an output capacity level from the plurality of output capacity levels acquired in the level acquiring step;
a level outputting step including outputting, to the power supply unit, the output capacity level selected in the level selecting step; and
a power supply controlling step including controlling supply of electric power to the battery pack according to the output capacity level selected in the level selecting step.

8. A program designed to cause one or more processors to perform the charging method of claim 7.
